# EUROPÄISCHE PATENTSCHRIFT

(11) **EP 2 959 152 B1**
(45) Veröffentlichungstag und Bekanntmachung des Hinweises auf die Patenterteilung: **08.05.2019**
(21) Anmeldenummer: 14703777.4
(22) Anmeldetag: 07.02.2014
(51) Int. Cl.: F02M 26/16, F02B 37/02, F02D 9/06

(54) **ABGASTRAKT FÜR EINE BRENNKRAFTMASCHINE**
EXHAUST DUCT FOR INTERNAL COMBUSTION ENGINE
CONDUIT DE GAZ D'ÉCHAPPEMENT POUR MOTEUR À COMBUSTION INTERNE

(30) Priorität: 22.02.2013 DE 102013003031
(43) Veröffentlichungstag der Anmeldung: 30.12.2015
(73) Patentinhaber: Daimler AG, 70327 Stuttgart (DE)
(72) Erfinder: KÜNZEL, Stefan, 71336 Waiblingen (DE)
(74) Vertreter: JENSEN & SON
(86) Internationale Anmeldenummer: PCT/EP2014/000346
(87) Internationale Veröffentlichungsnummer: WO 2014/127889

(56) Entgegenhaltungen:
- EP-A1- 2 295 769
- WO-A1-2009/018887
- DE-A1-102006 022 181

## Beschreibung

Die Erfindung betrifft einen Abgastrakt für eine Brennkraftmaschine gemäß dem Oberbegriff von Patentanspruch 1.

Ein solcher Abgastrakt für eine Brennkraftmaschine, insbesondere eines Kraftwagens, ist der DE 10 2008 064 264 A1 als bekannt zu entnehmen. Der Abgastrakt umfasst eine erste Abgasflut sowie eine zumindest teilweise von der ersten Abgasflut fluidisch getrennte, zweite Abgasflut. Die Abgasfluten sind jeweils von Abgas der Brennkraftmaschine durchströmbar. Ferner ist die erste Abgasflut einer ersten Turbinenflut einer Turbine eines Abgasturboladers zugeordnet. Die zweite Abgasflut ist einer zweiten, zumindest teilweise von der ersten Turbinenflut fluidisch getrennten Turbinenflut der Turbine zugeordnet. Dies bedeutet, dass der ersten Turbinenflut Abgas über die erste Abgasflut zugeführt wird bzw. zuführbar ist, während der zweiten Turbinenflut Abgas der Brennkraftmaschine über die zweite Abgasflut zugeführt wird bzw. zuführbar ist.

Der Abgastrakt umfasst ferner eine Abgasrückführleitung, welche von der ersten Abgasflut abzweigt. Dies bedeutet, dass die Abgasrückführleitung an einer Abzweigstelle der ersten Abgasflut fluidisch mit der ersten Abgasflut verbunden ist, so dass an der Abzweigstelle Abgas aus der ersten Abgasflut in die Abgasrückführleitung abgezweigt werden kann. Die Abgasrückführleitung dient zum Rückführen von Abgas der Brennkraftmaschine zu einer Einlassseite dieser, um somit einen emissionsarmen Betrieb der Brennkraftmaschine realisieren zu können.

Schließlich umfasst der Abgastrakt ein Versperrelement. Das Versperrelement ist zwischen wenigstens einer, ein Strömen von Abgas aus der ersten Abgasflut in die Abgasrückführleitung verhindernden Schließstellung und wenigstens einer, ein Strömen von Abgas aus der ersten Abgasflut in die Abgasrückführleitung ermöglichenden Offenstellung verstellbar. Mit anderen Worten ist die Abgasrückführleitung in der wenigstens einen Schließstellung fluidisch versperrt, so dass die Abgasrückführleitung nicht von Abgas durchströmt wird. In der Offenstellung ist die Abgasrückführleitung fluidisch freigegeben, so dass sie von Abgas durchströmt wird.

Auch aus der DE 10 2005 021 172 A1 ist ein Abgastrakt für eine Brennkraftmaschine bekannt. Das Abgas aus einer definierten Anzahl von Zylindern der Brennkraftmaschine durchströmt eine erste Abgasflut. Durch eine zweite Abgasflut strömt das Abgas der verbleibenden Zylinder der Brennkraftmaschine. Es ist eine Überbrückungsleitung zwischen der ersten Abgasflut und der zweiten Abgasflut vorgesehen. Über die Überbrückungsleitung sind die Abgasfluten fluidisch miteinander verbindbar. In der Überbrückungsleitung ist ein erstes Versperrelement angeordnet, mittels welchem die Überbrückungsleitung fluidisch freigebbar und versperrbar ist. Des Weiteren weist der Abgastrakt eine Abgasrückführleitung auf, welche von der ersten Abgasflut abzweigt und ein zweites Versperrelement aufweist. Mit dem zweiten Versperrelement ist die Abgasrückführleitung fluidisch freigebbar und versperrbar. Schließlich weist die erste Abgasflut stromabwärts der Abgasrückführleitung ein drittes Versperrelement auf. Mit dem dritten Versperrelement ist die erste Abgasflut fluidisch freigebbar und versperrbar. Dieser Abgastrakt weist eine relativ hohe Komplexität auf. Darüber hinaus hat es sich bei den herkömmlichen Abgastrakten als schwierig und besonders aufwändig erwiesen, hohe Motorbremsleistungen der Brennkraftmaschine verwirklichen zu können.

Weitere Abgastrakte mit mehreren Abgasfluten und einem kombinierten Versperrelement zum Versperren und Freigeben zumindest einer der beiden Fluten sind aus den Dokumenten EP 2 295 769 A1 und DE 10 2006 022 181 A1 bekannt geworden.

Es ist daher Aufgabe der vorliegenden Erfindung, einen Abgastrakt der eingangs genannten Art derart weiterzuentwickeln, dass sich mittels des Abgastrakts auch hohe Motorbremsleistungen auf besonders unkomplexe Weise realisieren lassen.

Diese Aufgabe wird durch einen Abgastrakt mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Um einen Abgastrakt der im Oberbegriff des Patentanspruchs 1 angegebenen Art zu schaffen, mittels welchem sich auch besonders hohe Motorbremsleistungen der Brennkraftmaschine auf besonders unkomplexe und somit einfache Weise realisieren lassen, ist es erfindungsgemäß vorgesehen, dass eine Verbindungsöffnung zwischen den Abgasfluten in einer ersten Schließstellung des Versperrelements freigegeben und in einer zweiten Offenstellung desselben mittels des Versperrelements versperrt ist. Dabei ist über die Verbindungsöffnung Abgas aus der ersten Abgasflut abzweigbar und der zweiten Abgasflut zuführbar. Mit anderen Worten ist das Versperrelement sowohl der Abgasrückführleitung als auch der Verbindungsöffnung zugeordnet, welche mittels des der Abgasrückführleitung und der Verbindungsöffnung gemeinsamen Versperrelements in der Schließstellung bzw. in der Offenstellung fluidisch versperrt sind. Vorteilhafterweise kann in einem Motorbremsbetrieb der Brennkraftmaschine das Abgas aus der ersten Abgasflut in die zweite Abgasflut strömen, so dass die zweite Abgasflut und damit die zweite Turbinenflut mit einem gesteigerten Abgasstrom beaufschlagt wird, wodurch eine höhere Motorbremsleistung erreichbar ist.

Das Versperrelement ist beispielsweise als Ventilelement, insbesondere als Klappe, ausgebildet, wobei beispielsweise die Klappe um eine Schwenkachse zwischen der Schließstellung und der Offenstellung verschwenkbar ist. Durch die Verwendung des einen Versperrelements sowohl zum fluidischen Versperren der Abgasrückführleitung als auch zum fluidischen Versperren der Verbindungsöffnung können die Teileanzahl, das Gewicht und die Kosten des Abgastrakts besonders gering gehalten werden. Zudem kann eine sehr hohe Funktionserfüllungssicherheit des Abgastrakts gewährleistet werden.

Erfindungsgemäß ist die erste Abgasflut mittels des Versperrelements in der ersten Schließstellung zumindest stromab der Verbindungsöffnung fluidisch versperrt. Dies bedeutet, dass das Abgas durch die erste Abgasflut hindurch bis zur Verbindungsöffnung, jedoch nicht weiter durch die erste Abgasflut strömen kann. Da die Abgasrückführleitung in der wenigstens einen Schließstellung auch durch das Versperrelement versperrt ist, kann das Abgas auch nicht durch die Abgasrückführleitung strömen. Das Abgas strömt somit im Bereich der Verbindungsöffnung über diese von der ersten Abgasflut in die zweite Abgasflut, so dass das gesamte Abgas stromab der Verbindungsöffnung durch die zweite Abgasflut strömt und dementsprechend der zweiten Turbinenflut zugeführt wird, während der ersten Turbinenflut kein Abgas zugeführt wird. Hierdurch werden in einem Motorbremsbetrieb der Brennkraftmaschine besonders hohe Motorbremsleistungen realisiert. Diese hohen Motorbremsleistungen sind dabei ohne die Verwendung eines zusätzlichen Versperrelements darstellbar.

Darüber hinaus ermöglicht es der Abgastrakt, eine Asymmetrie der Turbinenfluten und/oder der Abgasfluten gering zu halten und gegebenenfalls sogar die Turbinenfluten und/oder die Abgasfluten symmetrisch zueinander auszugestalten und dennoch sehr hohe Motorbremsleistungen verwirklichen zu können.

Erfindungsgemäß ist die erste Abgasflut mittels des Versperrelements in seiner ersten Offenstellung zumindest stromab einer Abzweigstelle, an welcher das Abgas aus der ersten Abgasflut in die Abgasrückführleitung abzweigbar ist, fluidisch versperrt. Vorteilhafterweise ist in der ersten Offenstellung auch die Verbindungsöffnung fluidisch versperrt, so dass eine besonders hohe Abgasrückführrate bzw. die maximal mögliche Abgasrückführrate von Abgas zur Einlassseite der Brennkraftmaschine erreicht wird, wodurch insbesondere Stickoxidemissionen im hohen Maß in einem befeuerten Betrieb der Brennkraftmaschine gesenkt werden können.

In einer weiteren Ausgestaltung der Erfindung ist das Versperrelement in eine zweite Offenstellung verstellbar, in welcher jeweils die Abgasrückführleitung als auch die erste Abgasflut sowie die Verbindungsöffnung fluidisch freigegeben ist. Vorteilhafterweise kann im befeuerten Betrieb der Brennkraftmaschine bzw. in einem Hauptfahrbereich der Brennkraftmaschine mittels der zweiten Offenstellung eine Abgasrückführrate und eine Beaufschlagung der Turbine eingestellt werden, so dass auch minimale Abgasrückführraten eingestellt werden können, wodurch eine ein besonders effektiver Betrieb der Brennkraftmaschine mit niedrigen Abgasemissionen ermöglicht wird.

In einer weiteren Ausgestaltung der Erfindung ist das Versperrelement in eine zweite Schließstellung verstellbar ist, in welcher ein Strömen von Abgas aus der ersten Abgasflut in die Abgasrückführleitung verhindert und die Verbindungsöffnung zwischen den Abgasfluten freigegeben ist. Vorteilhafterweise strömt dann das gesamte Abgas der Brennkraftmaschine in beiden Abgasfluten zur Turbine des Abgasturbolader, so dass eine erhöhte Verdichtung der Verbrennungsluft durch einen Verdichter des Abgasturboladers auf der Einlassseite der Brennkraftmaschine erreicht wird, wodurch insbesondere bei einer Lastanforderung an die Brennkraftmaschine bzw. bei einem Lastsprung ein erhöhtes Drehmoment sehr schnell zur Verfügung steht.

In einer weiteren Ausgestaltung der Erfindung weist die zweite Abgasflut einen größeren, von Abgas durchströmbaren Querschnitt auf als die erste Abgasflut. Vorteilhafterweise ist durch den kleineren Querschnitt der Abgasdruck in der ersten Abgasflut erhöht, so dass auch bei hohen Aufladegraden Abgas rückgeführt werden kann, wodurch eine besonders effiziente Reduzierung der Emissionen, insbesondere der Stickoxidemissionen, erreicht werden kann.

In einer alternativen Ausgestaltung der Erfindung sind die Querschnitte der Abgasfluten gleich groß ausgebildet. Vorteilhafterweise ist durch die erfindungsgemäße Abgasflut mittels des Versperrelements eine Reduzierung des Querschnitts der ersten Abgasflut einstellbar, so dass eine Druckerhöhung in der ersten Abgasflut und der Abgasrückführleitung möglich ist, wodurch ein entsprechendes Druckgefälle zur Einlassseite hin erzeugt wird und eine Abgasrückführung möglich wird.

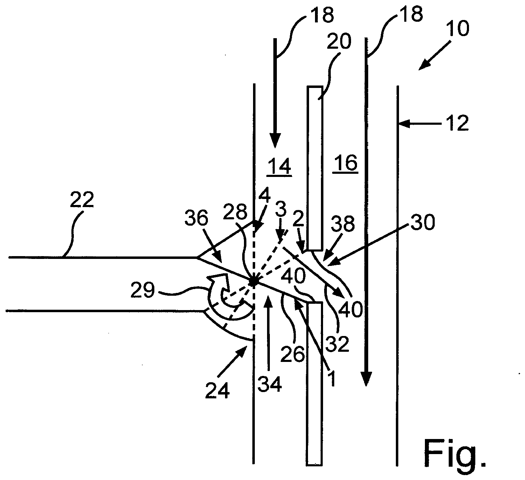

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur ausschnittsweise eine schematische Schnittansicht eines Abgastrakts 10 für eine Brennkraftmaschine, insbesondere eines Kraftwagens, mit zwei zumindest teilweise fluidisch voneinander getrennten Abgasfluten 14, 16, mit einer von einer der Abgasfluten 14 abzweigenden Abgasrückführleitung 22 und mit einem Versperrelement 26, mittels welchem jeweils eine Verbindungsöffnung 30 zwischen den Abgasfluten 14, 16 sowie die Abgasrückführleitung 22 und eine der Abgasfluten 14, 16 fluidisch versperrbar und fluidisch freigebbar sind.

Die Figur zeigt in der schematischen Schnittansicht einen Abgastrakt 10 für eine nicht dargestellte Brennkraftmaschine. Die Brennkraftmaschine ist dabei als Hubkolben-Brennkraftmaschine ausgebildet und umfasst eine Mehrzahl von Zylindern. Des Weiteren umfasst die Brennkraftmaschine eine Einlassseite zum Zuführen von Verbrennungsluft in die Zylinder und eine Auslassseite zum Abführen von Abgasen aus den Zylindern. Mittels des Abgastrakts 10 kann das Abgas von der Auslassseite zu einer Turbine eines Abgasturboladers und/oder in eine Abgasrückführung geleitet werden. Über die Abgasrückführung kann Abgas zur Einlassseite strömen. Ein Verdichter des Abgasturboladers verdichtet die Verbrennungsluft auf der Einlassseite.

Der Abgastrakt 10 umfasst eine Abgasverrohrung 12 mit einer ersten Abgasflut 14 und mit einer zweiten Abgasflut 16. Wie in der Figur durch Richtungspfeile 18 angedeutet ist, sind die beiden Abgasfluten 14, 16 von dem Abgas der Brennkraftmaschine durchströmbar. Die Abgasfluten 14, 16 sind mittels wenigstens einer Zwischenwandung 20 der Abgasverrohrung 12 fluidisch voneinander getrennt. Durch entsprechende, fluidische Kopplung der Abgasfluten 14, 16 mit der Auslassseite kann der ersten Abgasflut 14 eine erste definierte Anzahl der Zylinder und somit das Abgas aus diesen Zylindern zugeordnet werden, während der zweiten Abgasflut 16 eine zweite verbleibende Anzahl der Zylinder und somit Abgas aus diesen Zylindern zugeordnet werden.

Der Abgastrakt 10 umfasst auch die Abgasrückführleitung 22 der Abgasrückführung, welche an einer Abzweigstelle 24 der ersten Abgasflut 14 von der ersten Abgasflut 14 abzweigt und in die Einlassseite einmündet. Mittels der Abgasrückführleitung 22 ist die erste Abgasflut 14 durchströmendes Abgas an der Abzweigstelle 24 abzweigbar, so dass die erste Abgasflut 14 durchströmendes Abgas in die Abgasrückführleitung 22 überströmt. Die Abgasrückführleitung 22 dient zum Rückführen des Abgases vom Abgastrakt 10 zur Einlassseite der Brennkraftmaschine, über die das rückgeführte Abgas zumindest einem Teil der Zylinder wieder zugeführt wird. Dadurch können die Emissionen und insbesondere die Stickoxid-Emissionen der Brennkraftmaschine gering gehalten werden, so dass beispielsweise gesetzliche Abgasnormen erfüllt werden können.

In Strömungsrichtung 18 des Abgases durch die Abgasverrohrung 12 ist stromab der Abzweigstelle 24 wenigstens die in der Figur nicht dargestellte Turbine des Abgasturboladers angeordnet. Die Turbine umfasst ein Turbinengehäuse, in welchem ein Turbinenrad um eine Drehachse relativ zum Turbinengehäuse drehbar aufgenommen ist. Das Turbinengehäuse umfasst zwei zumindest teilweise fluidisch voneinander getrennte Turbinenfluten, über die dem Turbinenrad das Abgas zuführbar ist. Das Abgas kann das Turbinenrad dann anströmen und dadurch antreiben.

Die Turbinenfluten sind beispielweise jeweils als Spiralkanäle ausgebildet, welche sich in Umfangsrichtung des Turbinenrads über dessen Umfang zumindest im Wesentlichen spiralförmig erstrecken. Die Turbinenfluten sind hinsichtlich ihres Querschnitts asymmetrisch oder symmetrisch zueinander ausgebildet.

Die erste Abgasflut 14 ist dabei einer ersten der Turbinenfluten zugeordnet. Dies bedeutet, dass die Abgasflut 14 mit der ersten Turbinenflut fluidisch gekoppelt ist. Das die erste Abgasflut 14 stromab der Abzweigstelle 24 durchströmende Abgas kann somit der ersten Turbinenflut zugeführt werden.

Die zweite Abgasflut 16 ist der zweiten Turbinenflut zugeordnet. Dies bedeutet, dass die zweite Abgasflut 16 fluidisch mit der zweiten Turbinenflut gekoppelt ist, so dass das die zweite Abgasflut 16 durchströmende Abgas in die zweite Turbinenflut einströmen kann. Der Abgastrakt 10 umfasst ferner das Versperrelement vorliegend in Form einer Klappe 26, welche relativ zur Abgasverrohrung 12 um eine Schwenkachse 28 zwischen mehreren Stellungen 1, 2, 3, 4 verschwenkbar ist. Die erste Stellung 1 ist dabei anhand von durchgezogenen Linien veranschaulicht, während die Stellungen 2, 3 und 4 anhand von gestrichelten Linien veranschaulicht sind. Die Verschwenkbarkeit der Klappe 26 ist in der Figur durch einen Richtungspfeil 29 veranschaulicht.

Bei der Stellung 1 handelt es sich um eine erste Schließstellung der Klappe 26, in welcher ein Strömen von Abgas aus der ersten Abgasflut 14 in die Abgasrückführleitung 22 mittels der Klappe 26 verhindert ist. Die Abgasrückführleitung 22 ist in der ersten Schließstellung 1 fluidisch versperrt, so dass sie nicht von Abgas durchströmt werden kann. Darüber hinaus ist die Verbindungsöffnung 30 zwischen den Abgasfluten 14, 16 in der ersten Schließstellung 1 freigegeben. Über die als Durchgangsöffnung 38 der Zwischenwandung 20 ausgebildete Verbindungsöffnung 30 ist - wenn sie fluidisch freigegeben ist - ein Austausch von Abgas zwischen der ersten Abgasflut 14 und der zweiten Abgasflut 16 möglich. Die Durchgangsöffnung 38 ist von Wandungen 40 der Zwischenwandung 20 begrenzt.

Darüber hinaus ist die erste Abgasflut 14 mittels der Klappe 26 in der ersten Schließstellung 1 stromab der Verbindungsöffnung 30 fluidisch versperrt. Dies bedeutet, dass die erste Abgasflut 14 stromab der Verbindungsöffnung 30 nicht mehr von Abgas durchströmt wird. Das die erste Abgasflut 14 stromauf der Verbindungsöffnung 30 durchströmende Abgas strömt somit in der ersten Schließstellung 1 durch die freigegebene Verbindungsöffnung 30 hindurch in die zweite Abgasflut 16, so dass das gesamte Abgas aus allen Zylindern die erste Abgasflut 16 stromab der Verbindungsöffnung 30 durchströmt. Dieses Überströmen des Abgases aus der ersten Abgasflut 14 in die zweite Abgasflut 16 ist in der Figur durch einen Richtungspfeil 32 veranschaulicht. Da in der ersten Schließstellung 1 der Klappe 26 die Abgasrückführleitung 22 und die erste Abgasflut 14 verschlossen sind und die Verbindungsöffnung 30 von der erste Abgasflut 14 zur zweiten Abgasflut 16 offen ist, kommt es zu einer starken Aufladung der Brennkraftmaschine durch den Abgasturbolader, was mit einer hohen Motorbremsleistung einhergeht. Im Motorbremsbetrieb wird kein Kraftstoff in die Zylinder eingespritzt, wodurch die Brennkraftmaschine als eine Strömungsmaschine betrieben wird. Üblicherweise weisen Brennkraftmaschinen, die in einem Motorbremsbetrieb betrieben werden, an sich bekannte Vorrichtungen zur Steigerung der Motorbremsleistung auf. Dabei kann es sich beispielsweise um eine an sich bekannte Dekompressionsbremse handeln. Durch das Zusammenführen des Abgases aller Zylinder in die zweiten Abgasflut 16 kann durch eine dann optimale Anströmung der Turbine eine besonders effektive Aufladung der Brennkraftmaschine im Motorbremsbetrieb erreicht werden.

Zusätzlich kann die Teileanzahl des Abgastrakts 10 besonders gering gehalten werden, da die eine Klappe 26 sowohl zum fluidischen Versperren der ersten Abgasflut 14 stromab der Verbindungsöffnung 30 als auch zum fluidischen Versperren der Abgasrückführleitung 22 verwendet wird. Hierzu ragt die Klappe 26 in ihrer ersten Schließstellung 1 mit einem ersten Teilbereich 34 in die erste Abgasflut 14 und mit einem sich daran anschließenden, zweiten Teilbereich 36 in die Abgasrückführleitung 22 hinein. Dabei dient der erste Teilbereich 34 zum fluidischen Versperren der ersten Abgasflut 14 stromab der Verbindungsöffnung 30, während der zweite Teilbereich 36 zum fluidischen Versperren der Abgasrückführleitung 22 verwendet wird. Die beiden Teilbereiche 34, 36 der Klappe 26 schwenken jeweils um die Schwenkachse 28.

Bei der Stellung 2 handelt es sich um eine erste Offenstellung des Versperrelements bzw. der Klappe 26, in der die Abgasrückführleitung 22 fluidisch freigegeben ist. In der ersten Offenstellung 2 ist die Verbindungsöffnung 30 fluidisch versperrt, so dass sie nicht von Abgas durchströmt werden kann. Ferner ist in der zweiten Offenstellung auch die erste Abgasflut 14 stromab der Abzweigstelle 24 fluidisch versperrt, so dass sie dann nicht von Abgas durchströmt werden kann. Dies bedeutet, dass das gesamte, die erste Abgasflut 14 stromauf der Abzweigstelle 24 durchströmende Abgas aus der ersten Abgasflut 14 abgezweigt und der Abgasrückführleitung 22 zugeführt wird. Hierdurch ist eine maximal einstellbare Abgasrückführrate (AGR-Rate) eingestellt.

Bei der Stellung 3 handelt es sich um eine zweite Offenstellung bzw. Zwischenstellung der Klappe 26, die in einem Hauptfahrbereich der Brennkraftmaschine eingestellt wird. In der zweiten Offenstellung 3 sind sowohl die Abgasrückführleitung 22 als auch die erste Abgasflut 14 sowie die Verbindungsöffnung 30 freigegeben und demzufolge von Abgas durchströmbar. Durch eine Variation der Zwischenstellung der zweiten Offenstellung 3 kann das Abgas der Brennkraftmaschine entsprechend in die Abgasrückführleitung 22, die erste Abgasflut 14 und über die Verbindungsöffnung 30 aufgeteilt werden.

Bei der Stellung 4 der Klappe 26 handelt es sich um eine zweite Schließstellung, in welcher die Abgasrückführleitung 22 fluidisch versperrt und die Verbindungsöffnung 30 freigegeben ist. In der zweiten Schließstellung 4 ist auch die erste Abgasflut 14 freigegeben. Dies bedeutet, dass in der zweiten Schließstellung beide Abgasfluten 14, 16 von dem jeweiligen Abgas durchströmbar sind. Dadurch ist beispielsweise ein verbesserter Lastsprung im befeuerten Betrieb der Brennkraftmaschine darstellbar, indem ein bei einer entsprechenden Lastanforderung das gesamte Abgas ausschließlich über die beiden Abgasfluten 14, 16 auf die Turbine des Abgasturboladers einwirken kann, so dass ein entsprechend gesteigerter Ladedruck mittels des Verdichters des Abgasturboladers verwirklicht werden kann, wodurch die Brennkraftmaschine entsprechend schnell eine höheres Drehmoment bereitstellen kann.

Wie der Figur erkennbar ist, sind die Abgasfluten 14, 16 asymmetrisch ausgebildet. Dabei weist die erste Abgasflut 14 einen geringeren, vom Abgas durchströmbaren Strömungsquerschnitt auf als die zweite Abgasflut 16. Da die Abgasrückführleitung 22 von der ersten Abgasflut 14 abzweigt, wird die erste Abgasflut 14 auch als AGR-Flut (Abgasrückführflut) bezeichnet. Die erste Abgasflut 14 dient somit insbesondere dazu, Abgas mit einem hohen Druck für die Abgasrückführung bereitzustellen. Der Querschnitt der ersten Abgasflut 14 ist insbesondere für einen Druck des Abgases ausgelegt, der einen Druck auf der Einlassseite übersteigt. Der Druck der Verbrennungsluft auf der Einlassseite der Brennkraftmaschine ist durch einen Verdichter des Abgasturboladers angehoben und muss zur Abgasrückführung vom Druck des Abgases des in die Abgasrückführleitung 22 einströmenden Abgases aus der ersten Abgasflut 14 übertroffen werden.

Mittels des erfindungsgemäßen Abgastrakts 10 ist es auch denkbar, die beiden Abgasfluten 14, 16 hinsichtlich ihrer jeweiligen Querschnitte symmetrisch auszuführen. Durch eine entsprechende Variation insbesondere der zweiten Offenstellung 3 kann der Querschnitt der ersten Abgasflut 14 nur so weit verringert werden, dass ein Druck des Abgases in der ersten Abgasflut 14 und insbesondere in der Abgasrückführleitung 22 einen Druck auf der Einlassseite übersteigt. Vorteilhafterweise sinkt durch den Symmetrie gegebenen größeren Querschnitt der ersten Abgasflut 14 der Druck des Abgases in der ersten Abgasflut, so dass die Brennkraftmaschine mit den der ersten Abgasflut 14 zugeordneten Zylindern weniger Leistung zum Ausschieben des Abgases aus den Zylindern in die Auslassseite aufbringen muss, wodurch der Wirkungsgrad der Brennkraftmaschine steigt und zugleich Verbrauch und Abgasemissionen sinken.

Wie aus der Figur erkennbar ist, ist die Klappe 26 sowohl der Abgasrückführleitung 22 als auch der ersten Abgasflut 14 sowie der Verbindungsöffnung 30 zugeordnet und dient zum fluidischen Versperren und Freigeben dieser. Somit können die Teileanzahl und die Komplexität des Abgastrakts 10 besonders gering gehalten werden.

Da die Klappe 26 einen sehr großen Verstellbereich aufweist, lässt sich die Motorbremsleistung und die Abgasrückführung sehr gut steuern und insbesondere regeln.

Zur Realisierung eines emissionarmen Betriebs mit der Brennkraftmaschine mit hohen Motorbremsleistungen können jeweils eine gleiche Anzahl an Zylinder den Abgasfluten 14 und 16 zugeordnet werden. Selbstverständlich ist auch eine ungleichmäßige Aufteilung der Zylinder auf die Abgasfluten 14 und 16 denkbar.

Um Strömungsverluste beim Abgastrakt 10 besonders gering zu halten, kann darüber hinaus vorteilhafterweise vorgesehen sein, dass die Klappe 26 im Hauptfahrbereich zumindest im Wesentlichen parallel zur Strömungsrichtung des Abgases durch die Abgasverrohrung 12 bzw. durch die erste Abgasflut 14 verläuft.

## Patentansprüche

1. Abgastrakt (10) für eine Brennkraftmaschine, mit einer ersten Abgasflut (14), die einer ersten Turbinenflut einer Turbine eines Abgasturboladers zugeordnet und von Abgas der Brennkraftmaschine durchströmbar ist, mit einer zweiten Abgasflut (16), die zumindest teilweise von der ersten Abgasflut (14) fluidisch getrennt, von Abgas der Brennkraftmaschine durchströmbar und einer zweiten Turbinenflut der Turbine zugeordnet ist, mit einer von der ersten Abgasflut (14) abzweigenden Abgasrückführleitung (22), und mit einem Versperrelement (26), welches zwischen wenigstens einer, ein Strömen von Abgas aus der ersten Abgasflut (14) in die Abgasrückführleitung (22) verhindernden ersten Schließstellung (1) und wenigstens einer, ein Strömen von Abgas aus der ersten Abgasflut (14) in die Abgasrückführleitung (22) ermöglichenden ersten Offenstellung (2) verstellbar ist, **dadurch gekennzeichnet, dass**
eine fluidische Verbindungsöffnung (30) zwischen den Abgasfluten (14, 16), über welche Abgas aus der ersten Abgasflut (14) abzweigbar und der zweiten Abgasflut (16) zuführbar ist, in der ersten Schließstellung (1) mittels des Versperrelements (26) freigegeben und in der ersten Offenstellung (2) mittels des Versperrelements (26) versperrt ist und die erste Abgasflut (14) mittels des Versperrelements (26) in der ersten Schließstellung (1) zumindest stromab der fluidischen Verbindung (30) fluidisch versperrt ist und die erste Abgasflut (14) mittels des Versperrelements (26) in seiner ersten Offenstellung (2) zumindest stromab einer Abzweigstelle (24), an welcher das Abgas aus der ersten Abgasflut (14) in die Abgasrückführleitung (22) abzweigbar ist, fluidisch versperrt ist.

2. Abgastrakt (10) nach Anspruch 1,
**dadurch gekennzeichnet, dass**
das Versperrelement (26) in eine zweite Offenstellung (3) verstellbar ist, in welcher jeweils die Abgasrückführleitung (22) als auch die erste Abgasflut (14) sowie die Verbindungsöffnung (30) fluidisch freigegeben ist.

3. Abgastrakt (10) nach Anspruch 1 oder 2,
**dadurch gekennzeichnet, dass**
das Versperrelement (26) in eine zweite Schließstellung (4) verstellbar ist, in welcher ein Strömen von Abgas aus der ersten Abgasflut (14) in die Abgasrückführleitung (22) verhindert und die Verbindungsöffnung (30) zwischen den Abgasfluten (14, 16) und die erste Abgasflut (14) freigegeben ist.

4. Abgastrakt (10) nach einem der Ansprüche 1 bis 3,
**dadurch gekennzeichnet, dass**
die zweite Abgasflut (16) einen größeren, von Abgas durchströmbaren Querschnitt aufweist als die erste Abgasflut (14).

5. Abgastrakt (10) nach einem der Ansprüche 1 bis 3,
**dadurch gekennzeichnet, dass**
die Querschnitte der Abgasfluten (14, 16) gleich groß ausgebildet sind.

## Claims

1. Exhaust train (10) for an internal combustion engine, with a first exhaust gas flow (14), which is assigned to a first turbine flow of a turbine of a turbocharger and through which exhaust gas of the internal combustion engine can flow, with a second exhaust gas flow (16), which is at least partially separated fluidically from the first exhaust gas flow (14) and through which exhaust gas of the internal combustion engine can flow and which is assigned to a second turbine flow of the turbine, with an exhaust gas recirculation line (22) branching off the first exhaust gas flow (14), and with a blocking element (26), which can be moved between at least one first closing position (1) preventing a flow of exhaust gas from the first exhaust gas flow (14) into the exhaust gas recirculation line (22) and at least one first open position (2) allowing a flow of exhaust gas from the first exhaust gas flow (14) into the exhaust gas recirculation line (22),
**characterised in that**
a fluidic connection opening (30) between the exhaust gas flows (14, 16), via which exhaust gas can be branched off the first exhaust gas flow (14) and directed to the second exhaust gas flow (16) is freed in the first closing position (1) by means of the blocking element (26) and blocked in the first open position (2) by means of the blocking element (26), and **in that** the first exhaust gas flow (14) is fluidically blocked by means of the blocking element (26) in the first closing position (1) at least downstream of the fluidic connection (30) and the first exhaust gas flow (14) is fluidically blocked by means of the blocking element (26) in its first open position (2) at least downstream of a branch-off point (24), where the exhaust gas can be branched off the first exhaust gas flow (14) into the exhaust gas recirculation line (22).

2. Exhaust train (10) according to claim 1,
**characterised in that**
the blocking element (26) can be moved into a second open position (3), in which both the exhaust gas recirculation line (22) and the first exhaust gas flow (14) as well as the connection opening (30) are freed fluidically.

3. Exhaust train (10) according to claim 1 or 2,
**characterised in that**
the blocking element (26) can be moved into a second closing position (4), in which a flow of exhaust gas from the first exhaust gas flow (14) into the exhaust gas recirculation line (22) is prevented and the connection opening (30) between the exhaust gas flows (14, 16) and the first exhaust gas flow (14) are freed.

4. Exhaust train (10) according to any of claims 1 to 3,
**characterised in that**
the second exhaust gas flow (16) has a larger cross-section through which exhaust gas can flow than the first exhaust gas flow (14).

5. Exhaust train (10) according to any of claims 1 to 3,
**characterised in that**
the cross-sections of the exhaust gas flows (14, 16) are equal in size.

## Revendications

1. Conduite de gaz d'échappement (10) pour un moteur à combustion interne, comprenant une injection de gaz d'échappement (14) qui est associée à une première injection d'une turbine d'un turbocompresseur de gaz d'échappement et qui peut être traversée par le gaz d'échappement provenant du moteur à combustion interne, comprenant une seconde injection de gaz d'échappement (16), qui au moins partiellement est séparée fluidiquement de la première injection de gaz d'échappement (14), qui peut être traversée par le gaz d'échappement provenant du moteur à combustion interne et associée à une seconde injection de la turbine, comprenant une conduite de recirculation des gaz d'échappement (22) bifurquant de la première injection de gaz d'échappement (14), et comprenant un élément d'obstruction (26) qui peut être réglé entre au moins une première position de fermeture (1) empêchant un écoulement du gaz d'échappement à partir de la première injection de gaz d'échappement (14) dans la conduite de recirculation des gaz d'échappement (22) et au moins une première position d'ouverture (2) permettant un écoulement du gaz d'échappement à partir de la première injection de gaz d'échappement (14) dans la conduite de recirculation de gaz d'échappement (22), **caractérisé en ce qu'**un orifice de communication fluidique (30) entre les injection de gaz d'échappement (14, 16), par lequel le gaz d'échappement en provenant de la première de gaz d'échappement (14) peut être bifurquée et acheminée dans la seconde injection de gaz d'échappement (16), est libéré dans la première position de fermeture (1) au moyen de l'élément d'obstruction (26) et est bloqué dans la première position d'ouverture (2) au moyen de l'élément d'obstruction (26) et la première injection de gaz d'échappement (14) est bloqué fluidiquement au moyen de l'élément d'obstruction (26) dans la première position de fermeture (1) au moins en aval de la liaison fluidique (30) et la première injection de gaz d'échappement (14) est bifurquée au moyen de l'élément d'obstruction (26) dans sa première position d'ouverture (2) au moins en aval d'un point de dérivation (24), au niveau duquel le gaz d'échappement peut être bifurqué à partir de la première injection de gaz d'échappement (14) dans la conduite de recirculation des gaz d'échappement.

2. Conduite de gaz d'échappement (10) selon la revendication 1, **caractérisée en ce que** l'élément de fermeture (26) peut être réglé dans une seconde position d'ouverture (3), dans laquelle respectivement la conduite de recirculation des gaz d'échappement (22) ainsi que la première injection de gaz d'échappement (14) ainsi que l'ouverture de liaison (30)- peuvent être libérées fluidiquement.

3. Conduite de gaz d'échappement (10) selon la revendication 1 ou 2, **caractérisé en ce que** l'élément de fermeture (26) peut être réglé dans une seconde position de fermeture (4) dans laquelle un écoulement de gaz d'échappement à partir de la première injection de gaz d'échappement (14) est rendu impossible dans la conduite de recirculation des gaz d'échappement (22) et l'ouverture de liaison (30) est libérée entre les injections de gaz d'échappement (14, 16) et la première injection de gaz d'échappement (14).

4. Conduite de gaz d'échappement (10) selon l'une des revendications 1 à 3, **caractérisée en ce que** la seconde injection de gaz d'échappement (16) présente une section transversale pouvant être traversée par les gaz d'échappement, supérieure à la première injection de gaz d'échappement (14).

5. Conduite de gaz d'échappement (10) selon l'une des revendications 1 à 3, **caractérisée en ce que** les sections transversales des injections de gaz d'échappement (14, 16) sont de taille identique.
